# EUROPEAN PATENT SPECIFICATION

(11) **EP 3 116 977 B1**
(45) Date of publication and mention of the grant of the patent: **09.01.2019**
(21) Application number: 15721315.8
(22) Date of filing: 13.03.2015
(51) Int. Cl.: C10L 5/44, B01J 8/10

(54) **APPARATUS FOR THE TREATMENT OF SUBSTANCES OF VEGETABLE ORIGIN FOR PRODUCING BIOMASS TO BE USED FOR GENERATING ELECTRIC AND THERMAL ENERGY FROM RENEWABLE SOURCES, AND RELATIVE METHOD**
VORRICHTUNG ZUR BEHANDLUNG VON STOFFEN PFLANZLICHEN URSPRUNGS ZUR HERSTELLUNG VON BIOMASSE ZUR ERZEUGUNG ELEKTRISCHER UND THERMISCHER ENERGIE AUS ERNEUERBAREN QUELLEN SOWIE ENTSPRECHENDES VERFAHREN
APPAREIL DE TRAITEMENT DE SUBSTANCE D'ORIGINE VÉGÉTALE SERVANT À PRODUIRE DE LA BIOMASSE À UTILISER DANS LA PRODUCTION D'ÉLECTRICITÉ ET D'ÉNERGIE THERMALE PROVENANT DE SOURCES RENOUVELABLES AINSI QUE PROCÉDÉ ASSOCIÉ

(30) Priority: 13.03.2014 IT MI20140401
(43) Date of publication of application: 18.01.2017
(73) Proprietor: Franco, Livio, 87100 Cosenza (IT)
(72) Inventor: Franco, Livio, 87100 Cosenza (IT)
(74) Representative: Borsano, Corrado
(86) International application number: PCT/IB2015/051841
(87) International publication number: WO 2015/136490

(56) References cited:
- WO-A1-2013/032352
- WO-A2-2009/048875
- WO-A2-2010/121574
- DE-A1- 3 731 595
- FR-A1- 2 982 273
- US-A- 4 482 046
- US-A1- 2009 071 066
- US-A1- 2012 285 082
- US-A1- 2013 055 622

## Description

### [TECHNICAL FIELD]

The present invention relates to a treating apparatus for vegetable substances, for the production of biomass to be used for producing electric and thermal energy from renewable sources, as well as to a method thereof.

In general, the present invention relates to processes aimed at the transformation of vegetable substances and/or substances of biologic origin from agricultural and/or horticultural rejects and by-products, from the transformation and packaging of vegetable products in the agricultural and food industry, from residues of food to be marketed and distributed, from remains of food transformed for human and animal feeding, into biomass to be used for generating electric and thermal energy from renewable sources.

In general, the present invention is compatible with the transformation of products, by-products, rejects and residues of vegetable substances derived from sylviculture and from the related industries, including fishing, aquaculture and marine algae, and from mowing and pruning of public and private greenery, into biomass to be used for generating electric and thermal energy from renewable sources.

In general, the present invention is also compatible with the transformation of the vegetable fraction and/or biologic by-products from industrial and municipal wastes, for transforming said wastes into biomass to be used for generating electric and thermal energy from renewable sources.

In general, the present invention is compatible with the use of all vegetable substances and/or substances of biologic origin that can be found in nature, and/or with rejects or by-products from industrial and municipal wastes containing mainly water, and converts said substances into biomass to be used for producing electric and thermal energy from renewable sources.

### [PRIOR ART]

The evolution of modern society must take into account two strategically important elements: energy requirements and respect for the environment. The valence of these two factors is bound to the increasing development of humanity, and they now represent inexorable necessities for the survival of the current and future populations.

Electric energy plays a key role, due to supply difficulties and to the impelling need for fulfilling increasing requirements by using quotas of renewable sources as replacements for conventional ones produced by means of fossil fuels, which will eventually become exhausted. The worldwide-approved strategy aims at reducing CO2 emissions, increasing the use of renewable energy, and improving the energetic efficiency of the new technologies and their applications.

The most important international agreement against global climate warming was signed in 1997 at the Kyoto Conference, which came into force on 16th February 2005, after having been ratified by Russia. The Kyoto treaty commits the 55 signing countries to reduce the quantity of emissions of greenhouse effect gases (climate changing gases, which warm the earth climate) compared to their emission levels in 1990 (baseline). In order to achieve this goal, the signing countries must create a national system for monitoring the emissions and absorptions of greenhouse effect gases, to be updated on a yearly basis, and must define measures for emission reduction. In particular, the objective is to reduce the emission of carbon dioxide (CO2), which is considered to be the main cause of the greenhouse effect, and which is primarily produced by the use of fossil fuels in energetic, industrial and transportation activities.

In Europe, the Kyoto Protocol has found unanimous approval in all Community states. According to the 2001/77/EC Directive, the production of electric energy from renewable sources is given priority in order to reduce the greenhouse effect gases and the substances responsible for climate changes, thereby promoting environmental protection and the sustainable development policies adopted by the governments of the member states.

The subsequent 2009/28/EC Directive has similar objectives, which are already made clear in the preamble of the document: "*The control of European energy consumption and the increased use of energy from renewable sources, together with energy savings and increased energy efficiency, constitute important parts of the package of measures needed to reduce greenhouse gas emissions and comply with the Kyoto Protocol to the United Nations Framework Convention on Climate Change, and with further Community and international greenhouse gas emission reduction commitments beyond 2012. Those factors also have an important part to play in promoting the security of energy supply, promoting technological development and innovation and providing opportunities for employment and regional development, especially in rural and isolated areas*".

More recently, the European Council of 23-24th October 2014 approved the new objectives of the "20-20-20" climate-energy package, which by 2030 aims at reducing greenhouse gas emissions by 40%, increasing renewable sources in the final energy consumption by 27%, and attaining a 30% final energy efficiency improvement. In 2015 the path will begin for the adoption of the European legislative tools necessary for achieving such goals. The agreement envisages new forms of governance that will ensure better synergy among the member states and improved harmonization of the target measures.

On a national scale, the main legislative tools that have been adopted in Italy in order to reach the objectives of the Kyoto Protocol are as follows:
- CIPE Resolution 137/08 of 19.12.1998: "*Linee guida per le politiche e misure nazionali di riduzione delle emissioni dei gas serra*" (Guidelines for national policies and measures aimed at reducing greenhouse gas emissions);
- Law no. 120/02 of 02.06.2002: "*Ratifica ed esecuzione del Protocollo di Kyoto alia Convenzione quadro delle Nazioni Unite sui cambiamenti climatici, fatto a Kyoto l'11 dicembre 1997"* (Ratification and execution of the Kyoto Protocol to the United Nations Framework Convention on Climate Change, signed in Kyoto on 11th December 1997);
- CIPE Resolution 123/02 of 19.12.2002: Approval of the "*Piano Nazionale per la riduzione delle emissioni di gas responsabili dell'effetto serra, 2003-2010"* (National plan for the reduction of greenhouse gas emissions, 2003-2010), as a review of the guidelines for national policies and measures aimed at reducing greenhouse gas emissions.

These governance acts defined the executive measures for emission reduction and set the goals for each energy sector in the country, to be attained by the end of 2012. In the next period, there is still a commitment to be able to produce 20% of the total energy consumption from renewable sources, in compliance with the "20-20-20" climate-energy package. If we consider that in 2014 Italy emitted approximately 410 millions of tons of CO2 equivalent, one can understand the importance of the adopted measures.

The regulatory framework summarized above brings out the additional factor directly correlated to the increasing energy requirements: environmental protection.

The governments' unanimous action in this respect underlines that the challenge that humanity will have to face in the future will be based on the fact that our needs will have to be fulfilled while at the same time preserving the natural resources still available, by reducing waste through appropriate saving measures and more reuse, so as to protect the most important resource correlated to survival: the environment.

Nowadays, vegetable substances coming from the largest catchment area, consisting of residues of production, transformation, packaging and distribution processes of food intended for human feeding, are usually sent to the municipal solid waste (MSW) cycle, and are poorly valorized at the end of the separate collection process. The basic reason for this is that waste defined as "wet" contains also cooked food residues and food remains, wherein the latter may also be of animal origin.

The other quantities of substances of biological origin made available from by-products of agricultural and/or horticultural productions, from the transformation and packaging of vegetable products in the agricultural and food industry, and from residues of food intended for animal feeding, are even less valorized on production sites and in rural areas.

In more evolved contexts, the above-mentioned vegetable substances are used for energy production as "wet" fractions of organic waste that, in addition to other substances like animal manure, organic refuse such as serum and wastewaters, butchering refuse and depuration sludge, are used in anaerobic digestion processes, wherein the organic substance is degraded by organisms in the absence of oxygen, in order to generate combustible biogas to be used for producing electric and thermal energy and *Compost* for agricultural use. Biogas plants are complex and require big reactors; in addition, the efficiency of the biogas combustion cycle in the combustion engines employed for this purpose is low.

The substance transformation described so far represents a different utilization of fractions of waste of various nature, and cannot be considered to be a production cycle from "renewable sources", since the composition of the raw material employed is different from the original one.

In environmental terms, waste treatment plays a key role because of the limits of the technologies employed, the costs of the current disposal processes, and the impossibility of landfill disposal. Experience has shown that, in addition to separate collection, the most effective remedy is recycling. With reuse, the waste can be considered as a "secondary raw material" which, after being subjected to appropriate treatments, can be used as a raw material for further production processes of the same or different nature.

Considering only the national values, the data of 2009 show that the Italian production of municipal waste was approx. 32 millions of tons, about 21 of which came from non-diversified harvest (approx. 65% of the total), while the remaining 11 came from diversified harvest (approx. 35% of the total). Of the latter, 2.2 were wet fraction and 1.6 were greenery.

Therefore, without considering the usable part of the wet fraction, in Italy alone at least 1.6 millions of tons per year of waste of vegetable origin could be exploited for energy production. In Europe, numerous government bodies have issued laws concerning the appropriate management of the waste cycle (2006/12/EC Directive) for better environmental protection, adopting measures aimed at limiting waste formation, and promoting, in particular, the use of waste as an energy source, the development of "clean" technologies, saving natural resources, waste recovery by recycling, reuse and any other actions which might be useful to obtain suitable secondary raw materials. Waste disposal must take place by defining management plans and by using appropriate plants with suitable methods and technologies that can ensure a high degree of protection of the environment and of the public health.

The 2008/98/EC Directive fortifies the goals of the previous regulation by introducing basic definitions of waste, recovery and disposal, specifying the management cycle hierarchy, and establishing an approach that takes into account the entire life cycle of products and materials. Great attention is paid to reducing the environmental impacts connected to waste production and management, thus attributing additional economical value to the waste.

The 2008/98/EC Directive defines as «bio-waste»: biodegradable garden and park waste, food and kitchen waste from households, restaurants, caterers and retail premises and comparable waste from food processing plants. For organic waste, the 2008/98/EC Directive expressly states that: "*It is important, in accordance with the waste hierarchy, and for the purpose of reduction of greenhouse gas emissions originating from waste disposal on landfills, to facilitate the separate collection and proper treatment of bio-waste in order to produce environmentally safe compost and other bio-waste based materials without risk to the environment*". In addition, the recovery operations listed in Annex II of the same 2008/98/EC Directive include under the R1 code: "*Use principally as a fuel or other means to generate energy*".

Further studies on the state of the art in this regard will be shown below.

Document US2009025278 AA relates to a method and a device for producing fuel from biomass, wherein the biomass derives from biological wastes or exsiccated products resulting from wet and/or dry fermentation, and/or silage products, and/or other dry or moist biological wastes. According to document US2009025278 AA, the biomass is comminuted prior to exsiccation. Document US2009025278 AA proposes that the biomass be exsiccated by condensation drying at ambient temperature or at a higher temperature, e.g. by supplying hot air or another heated gas. Document US2009025278 AA envisages the possibility of using the residual heat coming from biomass composting or fermentation methods, from silage processes, and from cogeneration power plants. Document US2009025278 AA also envisages the use of a microwave heater in order to further exsiccate the biomass.

Document EP1413826 A1 relates to a process and an apparatus for microwave treatment of solid residues from thermal degradation of a charge containing organic matter. The process according to EP1413826 A1 involves thermal degrading of a load, by pyrolysis, to form a carbonaceous solid residue and a gas; the formed solid residue and the gas phase are separated; the solid residue is treated by a microwave radiation in the presence of an oxidizing agent, e.g. air or oxygen; the microwave treatment is carried out on a solid residue under hot conditions.

Document FR2982273A1 relates to a system for drying and torrefying a biomass of ligneous origin; in this system, the biomass is exsiccated by means of a gas flow heated to temperatures between 100° and 300°C and then re-mixed. The system known from FR2982273A1 needs to abate biomass humidity by means of heat coming from heated and insufflated gas; the blades that stir the biomass, however, subtract heat from it, thus making the process not very efficient.

Document DE3731595A1 relates to a device for drying organic material, re-mixed by a stirrer in a chamber where hot gases circulate. Also according to DE3731595A1, biomass exsiccation is only due to interaction with the gas, which must therefore be sufficiently heated, resulting in high energy consumption. US20130055622 discloses a process for making a fuel product.

The biomass treatment technologies known in the art for electric energy production have therefore proven to be ineffective in most of the contexts where they are in use.

### [OBJECTS AND SUMMARY OF THE INVENTION]

The present invention aims at providing a treating apparatus for vegetable substances and/or substances of biologic origin, for the conversion of said substances into biomass, which overcomes some of the problems suffered by the prior art.

It is in fact one object of the present invention to provide a treating apparatus for vegetable substances for the production of biomass to be used for producing electric and thermal energy from renewable sources, which represents an alternative to known technologies.

It is a particular object of the present invention to provide a treatment for vegetable substances and/or substances of biologic origin for the production of biomass to be used for producing electric and thermal energy from renewable sources, which is more effective than the technologies currently in use.

It is another object of the present invention to provide a treatment for converting the residual energy of vegetable substances and/or substances of biologic origin into biomass to be used for producing electric and thermal energy from renewable sources, which can improve the availability of energy resources for current and future requirements.

It is also one object of the present invention to show processes aimed at the transformation of vegetable substances and/or substances of biologic origin from agricultural and/or horticultural rejects and by-products, from the transformation and packaging of vegetable products in the agricultural and food industry, from residues of food to be marketed and distributed, from remains of food transformed for human and animal feeding, into biomass to be used for generating electric and thermal energy from renewable sources.

It is also one object of the present invention to disclose processes and methods implementing the transformation of products, by-products, rejects and residues of vegetable substances derived from sylviculture and from the related industries, including fishing, aquaculture and marine algae, and from mowing and pruning of public and private greenery, into biomass to be used for generating electric and thermal energy from renewable sources.

It is another object of the present invention to disclose processes, methods and technologies implementing the transformation of the fraction of vegetable origin and/or by-products of biologic origin from industrial and municipal wastes into biomass to be used for generating electric and thermal energy from renewable sources.

It is a further object of the present invention to provide a treatment for vegetable substances and/or substances of biologic origin, and/or for the biologic fraction of industrial and municipal wastes, which allows abating the water content of said substances, thereby transforming them into biomass suitable for use as fuel in high-efficiency electric and thermal energy cogeneration plants and/or plants based on the "Organic Rankine Cycle" (ORC).

It is a further object of the present invention to provide a treatment that converts the solar light energy stored through the photosynthesis process by vegetable substances and/or substances of biologic origin, and/or by the biologic fraction of industrial and municipal wastes during their growth as plants, into other forms of energy (electric and thermal) from renewable sources.

It is yet another object of the present invention to disclose a treatment that valorizes the CO2 fraction stored through the photosynthesis process by vegetable substances and/or substances of biologic origin, and/or by the biologic fraction of industrial and municipal wastes during their growth as plants, returning it to the environment during the transformation of said substances into biomass to be used for producing electric and thermal energy from renewable sources, in a theoretically infinite global process with null CO2 balance, which produces no environmentally harmful substances.

These and other objects are achieved through a treating apparatus for vegetable substances and/or substances of biologic origin and/or the biologic fraction of industrial and municipal wastes, and through a related method for the conversion of said substances into biomass to be used as fuel from renewable sources for producing electric and thermal energy, according to claims 1-9.

One idea at the basis of the present invention is to provide a treating apparatus for vegetable substances and/or substances of biologic origin and/or the biologic fraction of industrial and municipal wastes, which converts said substances into biomass. Said biomass can then be used for producing electric and thermal energy from renewable sources. The apparatus comprises a pre-treatment unit that prepares the vegetable substances and/or substances of biologic origin for the process, which is equipped with mechanical pressing and/or grinding means that remove beforehand part of the water content thereof and divides them into fragments having a shape and a size suitable for the process that follows; a treatment unit adapted to contain said vegetable substance fragments to be treated, equipped with motion means adapted to put in motion the vegetable substances inside the containment unit, in order to eliminate an additional water content percentage. Said treatment unit is also equipped with means for insufflating hot air into the containment unit, in order to exsiccate the vegetable substances.

This allows faster abatement of the percentage of residual water contained in said vegetable substance fragments, by transforming them into vegetable biomass suitable for use as fuel in plants for the production of electric and thermal energy from renewable sources.

Advantageously, the treatment is applicable to substances of biologic origin coming from rejects and by-products of agricultural and/or horticultural productions, from the transformation and packaging of vegetable products in the agricultural and food industry, from residues of food to be marketed and distributed, from remains of food transformed for human and animal feeding, from the transformation of products, by-products, rejects and residues of vegetable substances derived from sylviculture and from the related industries, including fishing, aquaculture and marine algae, and from mowing and pruning of public and private greenery, for converting said substances into biomass to be used as fuel for producing electric and thermal energy from renewable sources.

Advantageously, the process of the invention has been made compatible with the conversion of the fraction of vegetable origin and/or by-products of biologic origin from industrial and municipal wastes into biomass to be used as fuel for generating electric and thermal energy from renewable sources.

Thanks to the advantageous treatment of the present invention, it is possible to contribute to:
- valorizing the residual energy of vegetable substances without producing any climate changing substances, e.g. CO2;
- improving waste management, expanding the waste collection chain, and reducing the volume of waste substances;
- stimulating possible forms of collaboration for collecting vegetable resources at dedicated centres;
- awakening and motivating the whole community to environmental protection and to the value of natural resources;
- producing considerable quantities of biomass without having to fell wood portions or to resort to intensive cultivations that adversely affect the agricultural sector;
- spreading in a more capillary manner the technologies for the production of electric and thermal energy from renewable sources;
- safeguarding and protecting the environment and the public health.

Preferably, the motion means used in the present treatment comprise rotation means, such as bushings, bearings, shafts or the like, adapted to allow the containment unit to rotate about at least one axis, and motor means, such as an electric and/or hybrid motor, adapted to put the containment unit in rotary motion in order to move and stir the vegetable substances to be converted into biomass. This improves the exsiccation of said substances.

Through the centrifugal action of the rotating containment unit and the simultaneous action of the hot air flow on the fragments of stirred vegetable substance, exsiccation of the undesired moisture part is accelerated.

The containment unit has a substantially cylinder-like or truncated-cone-like shape, and the axis of rotation substantially coincides with the cylinder axis. This provides a treating apparatus having a rational and effective construction, improving its industrial usefulness. Moreover, the mass of vegetable substances to be converted into biomass, subjected beforehand to pressing and grinding, undergoes, through the effect of the rotation of the containment unit, a centrifugal force that contributes to expelling the water contained therein, thereby advantageously improving the exsiccation thereof.

The containment unit comprises at least one wall with a plurality of holes and/or apertures, so sized as to hold inside the biomass being moved, while at the same time allowing the hot air to flow into said containment unit to exsiccate the biomass contained therein. Such holes hold the biomass inside the containment unit while letting out the water separated from the biomass, thus improving the exsiccation of the latter.

Said treating unit, or a further treating unit associated therewith, may preferably be equipped with a system for irradiating microwaves onto the vegetable substances being moved therein, which causes thermal agitation of the structure of the vegetable substances, thereby optimizing the exsiccation process.

Preferably, the treating apparatus comprises a pneumatic circuit for conveying hot air up to the exsiccation means; the exsiccation means comprise means for distributing hot air inside the containment unit, and the pneumatic circuit is configured for connecting to a heat exchanger that heats the air by using heated water produced by the said process for producing electric energy and thermal energy, fed by the treatment of the invention. In this way, the treating system proves to be particularly effective when associated with high-efficiency electric and thermal energy production plants, or plants based on the Organic Rankine Cycle (ORC).

The present invention relates also to a treating method of vegetable substances for the production of biomass to be used for generating electric and thermal energy from renewable sources, which preferably incorporates at least all aspects described herein in regard to the treating apparatus according to the present invention, and further aspects pertaining to other apparatuses associable or associated with the same, within a process chain comprising multiple treatment steps.

The treating method comprises the steps of: collecting vegetable substances and/or substances of biologic origin into a pre-treatment unit and subjecting them beforehand to pressing in order to eliminate part of their water content, and/or grinding them into fragments for feeding the next cycle. This pre-treatment is preferably carried out by mechanical passage through a holed matrix; conveying the substance fragments into a containment unit for subjecting them to the treatment; the treatment consists of putting in motion the substance fragments inside the containment unit, preferably by exerting a centrifugal action that will move away the residual water contained in the substance. The simultaneous insufflation of hot air into the containment unit promotes the exsiccation of the residual water. By means of the process of the invention, biomass from renewable natural sources is obtained from the vegetable substances.

Preferably, the vegetable substance fragments, once centrifuged and exsiccated by the hot air flow, are further treated with microwaves that raise the temperature of the fragments and crystallize them, for a faster and more effective conversion of said fragments into biomass to be used for generating electric and thermal energy from renewable sources. The vegetable substance is put in motion and stirred by rotation of the containment unit, as already mentioned with reference to the treating apparatus.

Preferably, the treating method envisages to subject the obtained biomass to a subsequent combustion for producing electric and thermal energy; it is preferably envisaged to recover part of the heat resulting from cogeneration for heating the air to be used for exsiccating the vegetable substance fragments into biomass. The excess heat resulting from said exsiccation may preferably be used for other purposes.

Further advantageous and particular aspects will become more apparent from the following detailed description.

### [BRIEF DESCRIPTION OF THE DRAWINGS]

Some preferred and advantageous embodiments will now be described by way of non-limiting example with reference to the annexed drawings, wherein:
- Figure 1 exemplifies a biomass treating method according to the present invention.
- Figure 2 schematically shows a first embodiment of a biomass treating apparatus according to the present invention.
- Figure 3 schematically shows a second embodiment of a biomass treating apparatus according to the present invention.

The drawings show different aspects and embodiments of the present invention and, where appropriate, similar structures, components, materials and/or elements are designated in the various drawings by the same reference numerals.

### [DETAILED DESCRIPTION OF THE INVENTION]

With a view to subject substances of vegetable origin to a treatment for the production of biomass to be used for generating electric and thermal energy from renewable sources, the contribution given by the present invention is substantial.

While taking care of the environment, the present invention allows valorizing the residual renewable energy contained in vegetable substances coming from wastes of human and animal cycles, by transforming them into biomass to be used for producing electric and thermal energy from renewable sources by means of cogeneration processes.

The present invention allows to more effectively valorize the residual energy contained in vegetable substances available as rejects or by-products of human, animal and industrial cycles, before they undergo further transformations or contamination by other substances.

Just like the sun, the water and the wind, or biomass of ligneous origin, a natural resource such as the vegetable substance, when subjected to a "clean" transformation process, can return part of its energy to the environment it comes from, thus starting a theoretically infinite cycle.

The principles of the process on which a preferred embodiment of the present invention is based can be exemplified as follows:
- the solar light energy stored by plants through the photosynthesis process can be valorized in order to produce other forms of energy (electric and thermal) from renewable sources, in a theoretically infinite cycle;
- such residual energy is available from rejects and by-products of vegetable and/or biologic origin, resulting from the human and animal cycles and from the agricultural and food industry;
- said energy is also made available by a more effective and aware diversified harvest of substances of vegetable and/or biologic origin in industrial and municipal waste cycles;
- the vegetable mass thus obtained is subjected to a pressing and grinding pre-treatment that abates a first water content percentage and divides it into fragments suitably shaped and sized for the next process;
- the fragments thus obtained are subjected to a further exsiccation treatment through the centrifugal action produced by the rotation of the unit that contains them and through simultaneous insufflation of hot air into said unit;
- the hot exsiccating air is obtained from the same vegetable substance used in the cycle of the invention;
- the fragments may also be subjected to a better and faster exsiccation treatment by using microwaves inside the treatment unit;
- at the end of the treatment, the substance becomes biomass of vegetable origin, with no foreign substances;
- the biomass thus obtained has a moisture (water) content compatible with its use as fuel in high-efficiency cogeneration processes for the production of electric and thermal energy;
- during said combustion, the biomass produced from vegetable substances yields to the environment the same quantity of CO2 that it had absorbed during its growth as a plant;
- the cycle for the transformation of the energy contained in the biomass of vegetable origin, obtained by means of the present invention, can be considered to have a null CO2 balance, and hence to be theoretically infinite;
- the biomass obtained by the process of the present invention is a renewable energy source, and benefits from ministerial and/or governmental and/or institutional economical incentives specially envisaged for such sources;
- biomass supply can be promoted by giving the supplying users an economical bonus consisting of a percentage of the incentive envisaged for that resource, aiming at creating a supply chain based on awareness of the value of natural resources.

A further large-scale contribution given by the present invention to safeguarding and protecting the environment is the adoption of a more effective waste management cycle. As aforesaid, the present invention is also compatible with the transformation of the fraction of vegetable origin and/or by-products of biologic origin from industrial and municipal wastes, for transforming said wastes into biomass to be used for generating electric and thermal energy from renewable sources.

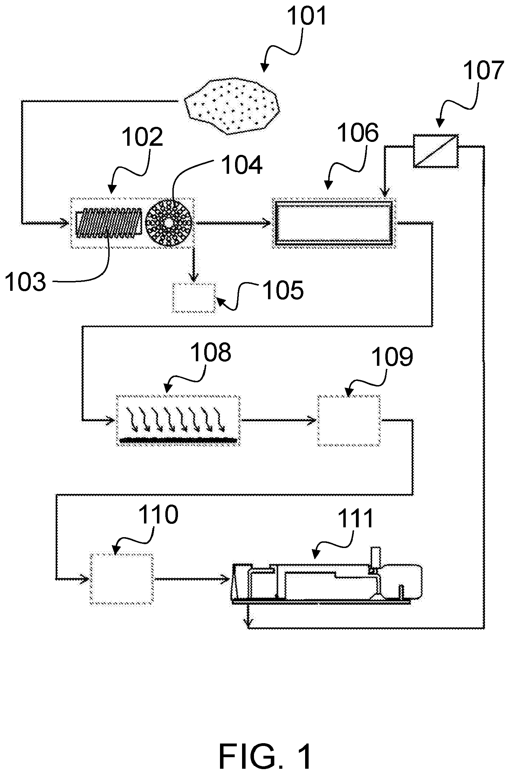

Figure 1 exemplifies an embodiment of the treating method for vegetable substances and/or substances of biologic origin for producing biomass according to the present invention.

Vegetable substances and/or substances of biologic origin and/or the biologic fraction of industrial and municipal wastes refer to all "substances coming from rejects and by-products of agricultural and/or horticultural productions, from the transformation and packaging of vegetable products in the agricultural and food industry, from residues of food to be marketed and distributed, from remains of food transformed for human and animal feeding, from the transformation of products, by-products, rejects and residues of vegetable substances derived from sylviculture and from the related industries, including fishing, aquaculture and marine algae, from mowing and pruning of public and private greenery, in addition to the fraction of vegetable origin and/or by-products of biologic origin coming from industrial and municipal wastes".

"Biomass" from renewable sources refers to the product obtained from the conversion of the above-mentioned vegetable substances and/or substances of biologic origin.

It is envisaged to treat a substance 101, preferably consisting of the above-defined vegetable substances and/or substances of biologic origin, in addition to other similar substances, resulting from a collection and storage step. The present invention preferably valorizes said substances also when they come from separate collection systems of current waste management cycles.

The substance 101 is prevalently made up of vegetable matter, containing water in a variable weight percentage, and a variously structured fibrous and pulpy matrix.

As will become more apparent below, the present invention aims at abating the water content of the vegetable substance 101, thus converting it into biomass of vegetable origin.

The vegetable substance 101 is subjected to a pre-treatment step consisting of: abating a first part of its water content; reducing the substance to homogeneous dimensions useful for subjecting it to the next treatment.

The vegetable substance 101 is thus put in motion, preferably by gravity or by means of a conveyor belt, towards a pre-treatment unit 102, which subjects it to a mechanical pressing and grinding process.

The pre-treatment unit 102 comprises at least one screw 103 connected to a container, in which the screw 103 rotates. Said screw 103 transports the mass of organic waste, pushing it against a matrix 104, which at the same time performs the operations of pressing out the water contained in the vegetable substances and grinding said substances to the size of fragments compatible with the subsequent treatments. Preferably, the holed matrix 104 has circular or rectangular holes.

Then the pre-treatment unit 102 does the following: grinds the substance to dimensions determined by the holes of the matrix 104; eliminates a first part of the water contained in the vegetables. The pre-treatment unit 102 then outputs part of the water previously contained in the vegetables, which can be drained into the common wastewater disposal network 105, since it contains no harmful substances.

In the pre-treatment unit 102, the material is ground and brought to dimensions suitable for the subsequent treatments by using minimal energy, and at the same time a first quantity of water contained in the organic substance is removed by the pressing action exerted on it.

At the outlet of the pre-treatment unit 102, the vegetable substance may require an additional centrifugal separating action or, as an alternative, a short period of "ground" storage for promoting separation in motion.

The vegetable substance thus pre-treated is then subjected to the treatment that will reduce the residual moisture content to the target percentage. By means of the treatment unit 106, the raw material, which is essentially of vegetable origin, is put in motion, subjected to an exsiccation process, and then expelled.

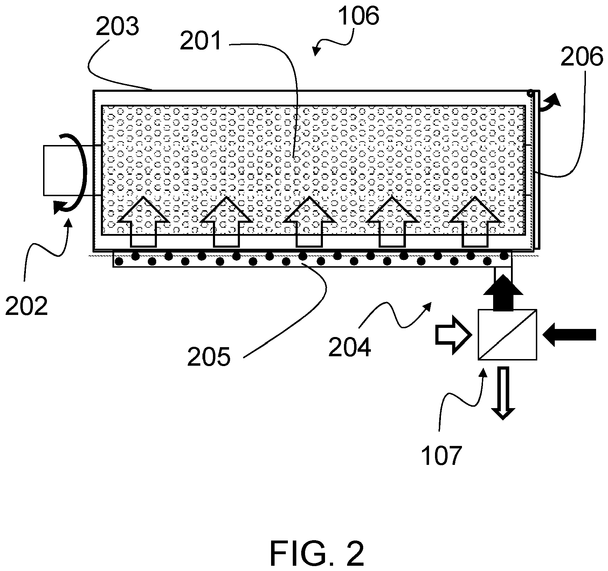

Figure 2 illustrates in greater detail a preferred and advantageous first embodiment of the treatment unit 106, i.e. the treating apparatus for vegetable substances and/or substances of biologic origin 106.

The treating apparatus 106 comprises a containment unit 201 adapted to contain the vegetable substance and/or a similar substance, to be treated for converting it into biomass. The containment unit 201 preferably comprises a side wall comprising a plurality of holes. The dimensions of the holes are such as to hold inside the vegetable substance, i.e. smaller than the average size of the fragments, thus preventing them from coming out.

Therefore, in the embodiment shown, the containment unit 201 comprises a cylinder, preferably a metallic one, with perforated walls.

The containment unit 201 is further adapted to be put in motion by the motion means 202. In this example, a motor, preferably an electric and/or hybrid one, coupled to a mechanical transmission, is adapted to rotate the cylinder about its axis, supported by suitable rotational supports, such as shafts and bearings. In this manner, the containment unit can put in motion and stir the biomass contained therein. The vegetable mass fragments, the size of which has been determined in the upstream pre-treatment unit 102, adhere to the walls of the rotating cylinder 201 through the effect of the centrifugal action; the diameters of the holes are smaller than the average size of the fragments, thus preventing them from coming out.

The treating apparatus 106 further comprises an outer casing 203 that defines a chamber in which the containment unit 201 is arranged.

The treating apparatus further comprises exsiccation means adapted to insufflate hot air into the casing 203, in order to exsiccate the vegetable substance.

During the exsiccation of the vegetable substance, the motion means stir it inside the containment unit 201.

Preferably, the exsiccation means comprise a pneumatic circuit 204, adapted to convey hot air, and distribution means 205 comprising a plurality of air outlets, adapted to distribute the hot air inside the containment unit 201 through the holes thereof, as shown by the clear arrows in Figure 2.

The pneumatic circuit 204 is configured for connecting to a heat exchanger 107, which will be described more in detail below, for heating the air to be used for exsiccating the vegetable substance.

In the treating apparatus 106, the vegetable matter previously obtained is subjected to a process that abates the quantity of residual moisture to the desired percentage.

The treating apparatus 106 performs three distinct actions:
1) it puts the vegetable substance in motion, preferably by means of a rotating perforated metallic cylinder. The biomass fragments of the size obtained in the previous module preferably adhere to the walls of the rotating cylinder through the effect of the centrifugal action to which they are subjected. The diameters of the ventilation holes are smaller than the average dimensions of the fragments, thus preventing them from coming out. At the same time, the centrifugal action moves away a part of the water contained in the vegetable substance, directing it out of the metallic cylinder, thus promoting the exsiccation process.
2) it subjects the vegetable substance to an exsiccation process. Exsiccation occurs mainly through insufflation of hot air into the rotating perforated cylinder.
3) it expels the treated matter, preferably through an open base of the cylinder; the treated biomass is dragged, with the aid of the air flow and of the turning containment unit, towards an outlet section, and is then fed into an additional chamber.

As aforementioned, the heat exchanger 107 is preferably supplied with heated water produced by the cogeneration process for the production of electric and thermal energy, obtained from the same vegetable substance converted into biomass by means of the present method, through which air is heated. The hot exsiccation air is thus preferably produced from the conversion of the heat generated by the cogeneration cycle, and/or by the Organic Rankine Cycle of the waste-to-energy plant 111, which will be described below. An Organic Rankine Cycle (ORC), in fact, generates approx. 80% of thermal energy and approx. 20% of electric energy.

The ORC thermal output consists of, among other things, hot water, typically having a temperature of approx. 90°C, which is then conveyed towards the exchanger 107; inside the latter, the hot water flows in radiant elements, exchanging its heat with an air flow lapping said elements and transforming it into hot air to be used for the above-described exsiccation. The process is thus optimized from the energetic viewpoint, in that it exploits the excess heat produced by the cogeneration cycle for exsiccating the vegetable substances, resulting in an additional efficiency advantage.

When exsiccation is over, the fragments of vegetable material in the cylinder are expelled. A base 206 of the cylinder (or truncated cone) is opened, and the mass is dragged out, preferably by the air flow or by the action exerted by mechanical means.

The dry mass is then conveyed, preferably by a conveyor roller (not shown) to the other treatment steps, which will be described again with reference to Figure 1.

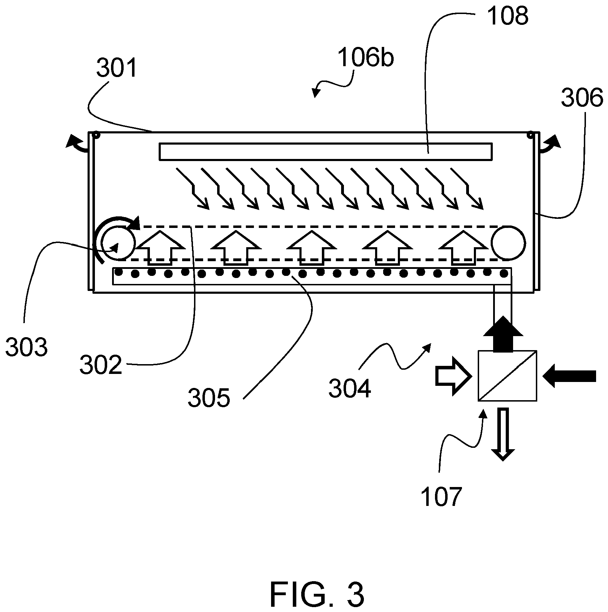

Figure 3 illustrates in more detail a treatment unit 106, i.e. the treating apparatus for vegetable substances designated 106b in Figure 3 to distinguish it from the embodiment 106 previously described with reference to Figure 2.

The treating apparatus 106b comprises a containment unit 301 adapted to contain the vegetable substance and/or a similar substance to be treated.

The containment unit 301 includes, inside of it, a conveyor belt 302 for moving the vegetable substance or the like to be treated.

The conveyor belt 302 is put in motion by motion means 303. In this example, a motor, preferably an electric and/or hybrid one, and a mechanical transmission are adapted to rotate the cylinder 303 about its axis, supported by suitable rotational supports, such as shafts and bearings. In this manner, the conveyor belt 302 can put the supported biomass in motion.

The conveyor belt 302 comprises a "mesh" structure, i.e. a holed matrix adapted to support the material being transported by the roller, while at the same time allowing the passage of air, as will become apparent below. In particular, the dimensions of the holes of the matrix or "mesh" of the belt 302 are smaller than the average size of the fragments, thus preventing them from falling.

The treating apparatus 106b further comprises exsiccation means adapted to insufflate hot air into the containment means 301, in order to exsiccate the vegetable substance. During the exsiccation process, the conveyor belt 302 moves the vegetable substance through the containment unit 301. Preferably, the exsiccation means comprise a pneumatic circuit 304, adapted to convey hot air, and distribution means 305 comprising a plurality of air outlets, adapted to direct the hot air onto the vegetable substance being transported by the conveyor belt 302, the air flowing through the holes thereof, as shown by the clear arrows in Figure 3. The pneumatic circuit 304 is configured for connecting to a heat exchanger, such as the heat exchanger 107.

Also in the treating apparatus 106b, the vegetable matter previously obtained is subjected to a process that abates the quantity of residual moisture to the desired percentage.

Also the treating apparatus 106b is therefore adapted to perform three distinct actions:
1) it puts the vegetable matter in motion by means of a conveyor belt 302 having a matrix or "mesh" structure. The vegetable substance fragments having the dimensions obtained in the previous module are such that they cannot fall down through the conveyor belt 302.
2) it subjects the vegetable substance to an exsiccation process. Exsiccation occurs by insufflation of hot air through the holes of the conveyor belt 302, and hence through the vegetable substance supported by it.
3) it expels the treated matter, preferably through an openable outlet section 306 or a dedicated outlet in the containment unit 301; the fragments of material are expelled through the action exerted by the conveyor belt 302 and/or by the insufflated air.

A microwave treating apparatus 108, which will be described more in detail below, also with reference to the microwave unit 108, is advantageously associated with the treating apparatus 106b, possibly integrated into the apparatus 106b itself and preferably parallel to the path of the conveyor belt 302.

The dry mass is then conveyed, preferably by an additional conveyor roller (not shown) to the other treatment steps, which will be described again with reference to Figure 1.

In general, suitable vents and/or valves can be employed for supplying and exhausting hot air in the treating apparatuses 106 and 106b.

The exsiccation process described so far is preferably complemented with a treatment for crystallizing the fragments of organic material through the use of microwaves in the microwave unit 108.

The microwave unit 108 allows further treatment of the vegetable substance by thermal agitation of the residual water molecules, thereby making the substance anhydrous. In general, the increased temperature of the fragments subjected to microwaves promotes their subsequent combustion.

By means of the microwave treatment, the vegetable substance is made anhydrous, reducing the residual water content to moisture levels compatible with its conversion into biomass to be used in high-efficiency cogeneration cycles, such as, preferably, the Organic Rankine Cycle (ORC).

As is known, microwaves are electromagnetic waves with a frequency of approx. 2.45 GHz; they cause an increase in the rotational energy of the water molecules prevalently contained in vegetable substances, which behave as "electric dipoles". The energy of the microwaves causes an increase in the rotational energy at the dipoles of the water molecules, which produces a «shaking» effect on the molecules. This intermolecular «friction» generates heat that propagates outwards from within the material.

As aforesaid, in the microwave unit 108 the percentage of residual moisture contained in the vegetable substances can be abated.

In a preferred embodiment, the microwave treatment is carried out simultaneously with the transportation on the conveyor belt 302 in the treating apparatus 106b. In such a case, the microwave unit 108 and the apparatus 106b are joined into a single machinery, as shown.

The material thus treated is fed to the loading unit 109; the vegetable mass converted into anhydrous biomass arrives at the loading mouth of the combustion boiler 110 (or another similar machinery), preferably by means of a mechanism fitted with a screw or a conveyor belt. The terminal part of the conveyor roller, preferably of the vibrating type, feeds the treated material to the intake mouth of the combustion boiler 110 of the high-efficiency cogeneration system, preferably based on an Organic Rankine Cycle, whether directly or through a screw for extraction from a collection heap. Through combustion, the boiler 110 heats the oil, preferably a diathermal one, which then yields its heat to the silicone-based fluid fed to the ORC cycle.

The ORC unit 111 uses the heat produced by the combustion of the vegetable substances 101 converted into biomass in the boiler 110 and carried by the silicone-based fluid in order to produce electric and thermal energy from renewable sources.

In the process according to the present invention illustrated herein, the obtained biomass can be used in modern cogeneration plants and/or, even more advantageously, in high-efficiency cogeneration plants. In the latter, the heat obtained from burnt biomass causes evaporation of a fluid with high molecular weight that expands on the rotor of a turbine, which in turn drives an associated electric generator. The fluid is condensed prior to being reused in the cycle. These cogeneration plants based on the "Organic Rankine Cycle", wherein biomass is subjected to combustion, are more reliable and efficient that biodegradation, anaerobic digestion and gasification processes. They produce electric and thermal energy from renewable sources. The generated heat is partly used for exsiccating the biomass in accordance with the principle of the invention; the remaining part can be further valorized. The power rating is of the order of 1 electric MW or higher, and allows its use also in the proximity of urban areas without any significant impact on the environment.

### [INDUSTRIAL APPLICABILITY]

In addition to being compatible with the present invention, the goals of the principal Community Directives about waste classification, wherein wastes are considered as substances to be used for energy production, can be enhanced by the need for diversifying the wet fraction in a more effective manner, in order to be able to more efficiently valorize the fraction of vegetable origin available therein.

To this end, the process of the invention has been made compatible with plants suitably sized for widespread installation, by envisaging collection centres accessible to the users and by assigning the latter, or the entrusted subject along the supply chain, a percentage of the economical value of the resource as an incentive or discount on the disposal tax. By so doing, a more effective separation of the vegetable fraction will be attained, resulting in increased collection. The new utilization will have positive effects on the entire cycle, thus strengthening the measures for waste management and reduction, environmental protection and public health.

In general, rejects and by-products of vegetable substances and/or substances of biologic origin coming from industrial and municipal wastes are also converted, according to the present invention, into biomass to be used for producing electric and thermal energy from renewable sources, resulting in evident social, environmental and productive advantages.

The increased biomass production resulting from the use of the invention will contribute to reduce the use of ligneous biomass, in particular of biomass derived from wood chips obtained by felling portions of woods or from dedicated intensive cultivations, leading to obvious environmental benefits.

## Claims

1. **Treating apparatus** for vegetable substances and/or substances of biologic origin and/or substances from the biologic fraction of industrial and municipal wastes, for the conversion of said substances into biomass to be used for producing electric and thermal energy from renewable sources, comprising: a containment unit (201, 301) adapted to contain said substance to be treated, exsiccation means (205, 305) adapted to insufflate hot air into said containment unit (201) in order to exsiccate said substance, and motion means (202, 302) adapted to put in motion said substance inside said containment unit (201, 301) during said exsiccation, a pre-treatment unit (102) comprising mechanical pressing and/or grinding means;
**characterized in that:**
said pre-treatment unit (102) is configured to remove part of the water content of said substance before said substance is inserted into said containment unit (201, 301),
**also characterized in that:**
said containment unit (201) has a substantially cylinder-like or truncated-cone-like shape, and wherein said motion means (202) comprise rotation means adapted to allow said containment unit (201) to rotate about at least one axis of rotation substantially coinciding with the axis of said cylinder, and motor means adapted to rotate said containment unit (201) in order to move and stir said substance, by exerting a centrifugal action that moves away a residual water contained in the substance,
and
said containment unit (201) comprises at least one wall comprising a plurality of holes, said holes being so sized as to allow to hold inside said substance put in motion during said rotation, said holes being further configured to allow said hot air, insufflated by said exsiccation means, to enter said containment unit (201) through said holes.

2. Apparatus according to claim 1, wherein said pre-treatment unit (102) comprises a holed matrix (104) configured to be crossed by said substance during said pressing and/or grinding.

3. Apparatus according to claim 2, wherein said pre-treatment unit (102) further comprises a screw (103) configured to rotate and at the same time push said substance through said holed matrix (104).

4. Apparatus according to any one of claims 1 to 3, further comprising a microwave unit (108) configured to further treat said substance by microwave irradiation, thereby raising the temperature of said substance in order to make it anhydrous.

5. Apparatus according to any one of claims 1 to 4, further comprising a pneumatic circuit (204, 304) adapted to convey said hot air up to said exsiccation means (205, 305), wherein said exsiccation means (205, 305) comprise distribution means for distributing said hot air within said containment unit (201, 301), said pneumatic circuit (204, 304) being configured for connecting to a heat exchanger (107) that is suppliable with heated water produced by a process for producing electric or thermal energy from said treated substance, said exchanger (107) being adapted to heat said air.

6. **Treating method** of vegetable substances and/or substances of biologic origin and/or substances from the biologic fraction of industrial and municipal wastes, for the conversion of said substances into biomass to be used for producing electric and thermal energy from renewable sources, comprising the steps of: collecting a substance to be treated into a containment unit (201, 301); exsiccating (205, 305) said substance by insufflation of hot air into said containment unit (201, 301); putting in motion (202, 302) said substance inside said containment unit (201, 301) during said exsiccation; pre-treating (102) said substance by pressing and/or grinding, in order to remove part of the water content of said substance before said substance is collected into said containment unit (201, 301), wherein
said containment unit (201) has a substantially cylinder-like or truncated-cone-like shape,
said substance is put in motion and stirred by the rotation (202) of said containment unit (201) by exerting a centrifugal action that moves away a residual water contained in the substance, and wherein
said substance is held inside said containment unit (201) by a plurality of holes in at least one wall thereof, as said hot air is blown into said containment unit (201) through said plurality of holes and insufflated by said exsiccation means.

7. Treating method according to claim 6, wherein said pressing and/or grinding (102) is carried out by mechanical passage through a holed matrix (104), preferably by a pushing action exerted by a rotating screw (103).

8. Treating method according to claims 6 or 7 , further comprising the step of: further treating said substance with microwaves (108), thereby raising the temperature of the substance in order to make it anhydrous.

9. Treating method according to any one of claims 6 to 8 , further comprising the steps of: subjecting said substance to a subsequent combustion (110) for producing electric and/or thermal energy (111); recovering part of the heat resulting from said production of electric and/or thermal energy (111) for heating said air (107), said air being heated in a heat exchanger (107) connected to a pneumatic circuit (204, 304).

## Patentansprüche

1. **Behandlungsvorrichtung** für pflanzliche Substanzen und/oder Substanzen biologischen Ursprungs und/oder Substanzen aus dem biologischen Anteil von industriellen und akommunalen Abfällen zur Umwandlung dieser Substanzen in Biomasse, die zur Erzeugung elektrischer und thermischer Energie aus erneuerbaren Quellen verwendet wird, umfassend: eine Behältereinheit (201, 301), die angepasst ist, um die zu behandelnde Substanz aufzunehmen, Exsikkationsmittel (205, 305), die angepasst sind, heiße Luft in die Behältereinheit (201) zu insufflieren, um die Substanz zu exsikkatisieren, und Bewegungsmittel (202, 302), die angepasst sind, um die Substanz innerhalb der Behältereinheit (201, 301) während der Exsikkation in Bewegung zu setzen, eine Vorbehandlungseinheit (102), die mechanische Press- und/oder Mahlmittel umfasst;
**dadurch gekennzeichnet, dass:**
die Vorbehandlungseinheit (102) konfiguriert ist, um einen Teil des Wassergehalts der Substanz zu entfernen, bevor die Substanz in die Behältereinheit (201, 301) eingesetzt wird,
**auch dadurch gekennzeichnet, dass:**
die Behältereinheit (201)
eine im Wesentlichen zylinderartige oder kegelstumpfförmige Form aufweist, und wobei die Bewegungsmittel (202) Rotationsmittel umfassen, die angepasst sind, um es der Behältereinheit (201) zu ermöglichen, sich um mindestens eine Drehachse zu drehen, die im Wesentlichen mit der Achse des Zylinders übereinstimmt, und Motormittel, die angepasst sind, um die Behältereinheit (201) zu drehen, um die Substanz durch Ausüben einer Zentrifugalwirkung, die ein in der Substanz enthaltenes Restwasser wegbewegt, zu bewegen und zu rühren,
und
wobei die Behältereinheit (201) mindestens eine Wand mit einer Vielzahl von Löchern umfasst, wobei die Löcher so bemessen sind, dass sie es ermöglichen, die während der Drehung in Bewegung gesetzte Substanz innen zu halten, wobei die Löcher weiter so konfiguriert sind, dass die heiße Luft, die durch die Exsikkationsmittel insuffliert wird, in die Behältereinheit (201) durch die Löcher eintreten kann.

2. Vorrichtung nach Anspruch 1, wobei die Vorbehandlungseinheit (102) eine gelochte Matrix (104) umfasst, die konfiguriert ist, um von der Substanz während des Pressens und/oder Mahlens durchquert zu werden.

3. Vorrichtung nach Anspruch 2, wobei die Vorbehandlungseinheit (102) weiter eine Schraube (103) umfasst, die konfiguriert ist, um die Substanz zu drehen und gleichzeitig durch die gelochte Matrix (104) zu drücken.

4. Vorrichtung nach einem der Ansprüche 1 bis 3, weiter umfassend eine Mikrowelleneinheit (108), die konfiguriert ist, um die Substanz durch Mikrowellenbestrahlung weiter zu behandeln und dadurch die Temperatur der Substanz zu erhöhen, um sie wasserfrei zu machen.

5. Vorrichtung nach einem der Ansprüche 1 bis 4, weiter umfassend einen pneumatischen Kreislauf (204, 304), der angepasst ist, um die heiße Luft zu den Exsikkationsmitteln (205, 305) zu fördern, wobei die Exsikkationsmittel (205, 305) Verteilermittel zum Verteilen der heißen Luft innerhalb der Behältereinheit (201, 301) umfassen, wobei der pneumatische Kreislauf (204, 304) zum Verbinden mit einem Wärmetauscher (107) konfiguriert ist, der mit erwärmtem Wasser versorgt werden kann, das durch ein Verfahren zum Erzeugen von elektrischer oder thermischer Energie aus der behandelten Substanz erzeugt wird, wobei der Wärmetauscher (107) zum Erwärmen der Luft angepasst ist.

6. **Behandlungsverfahren** für pflanzliche Substanzen und/oder Substanzen biologischen Ursprungs und/oder Substanzen aus dem biologischen Anteil von industriellen und kommunalen Abfällen zur Umwandlung dieser Substanzen in Biomasse, die zur Erzeugung von elektrischer und thermischer Energie aus erneuerbaren Quellen verwendet wird, umfassend die Schritte von: Sammeln einer zu behandelnden Substanz in eine Behältereinheit (201, 301); Exsikkatisieren (205, 305) der Substanz durch Insufflation von heißer Luft in die Behältereinheit (201, 301); In Bewegung setzen (202, 302) der Substanz innerhalb der Behältereinheit (201, 301) während der Exsikkatisierung; Vorbehandeln (102) der Substanz durch Pressen und/oder Mahlen, um einen Teil des Wassergehalts der Substanz zu entfernen, bevor die Substanz in der Behältereinheit (201, 301) gesammelt wird,
wobei die Behältereinheit (201) eine im Wesentlichen zylinderförmige oder kegelstumpfartige Form aufweist,
die Substanz durch die Drehung (202) der Behältereinheit (201) in Bewegung gesetzt und gerührt wird, indem eine Zentrifugalwirkung ausgeübt wird, die ein in der Substanz enthaltenes Restwasser wegbewegt, und wobei
die Substanz innerhalb der Behältereinheit (201) durch eine Vielzahl von Löchern in mindestens einer Wand davon gehalten wird, während die heiße Luft durch die Vielzahl von Löchern geblasen wird und durch die Exsikkatisierungsmittel in die Behältereinheit (201) insuffliert wird.

7. Behandlungsverfahren nach Anspruch 6, wobei das Pressen und/oder Mahlen (102) durch mechanisches Durchlaufen einer gelochten Matrix (104), vorzugsweise durch eine von einer rotierenden Schraube (103) ausgeübte Druckwirkung, durchgeführt wird.

8. Behandlungsverfahren nach den Ansprüchen 6 oder 7, weiter umfassend den Schritt: weiteres Behandeln der Substanz mit Mikrowellen (108), wodurch die Temperatur der Substanz erhöht wird, um sie wasserfrei zu machen.

9. Behandlungsverfahren nach einem der Ansprüche 6 bis 8, weiter umfassend die Schritte: Unterwerfen der Substanz einer nachfolgenden Verbrennung (110) zum Erzeugen von elektrischer und/oder thermischer Energie (111); Rückgewinnen eines Teils der Wärme, die aus der Erzeugung von elektrischer und/oder thermischer Energie (111) zum Erwärmen der Luft (107) resultiert, wobei die Luft in einem Wärmetauscher (107) erwärmt wird, der mit einem pneumatischen Kreislauf (204, 304) verbunden ist.

## Revendications

1. Appareil de traitement pour substances végétales et/ou substances d'origine biologique et/ou substances issues de la fraction biologique des déchets industriels et ménagers, pour la conversion desdites substances en biomasse à utiliser pour produire de l'énergie électrique et thermique à partir de sources renouvelables, comprenant : une unité de confinement (201, 301) adaptée pour contenir ladite substance à traiter, des moyens de dessiccation (205, 305) adaptés pour insuffler de l'air chaud dans ladite unité de confinement (201) afin de dessécher ladite substance, et des moyens de mouvement (202, 302) adaptés pour mettre en mouvement ladite substance à l'intérieur de ladite unité de confinement (201, 301) pendant ladite dessiccation, une unité de prétraitement (102) comprenant des moyens de pressage et/ou de broyage mécaniques ;
**caractérisé en ce que** :
ladite unité de prétraitement (102) est configurée pour éliminer une partie de la teneur en eau de ladite substance avant que ladite substance soit insérée dans ladite unité de confinement (201, 301),
également **caractérisé en ce que** :
ladite unité de confinement (201)
a une forme sensiblement de type cylindre ou de type tronconique, et dans lequel lesdits moyens de mouvement (202) comprennent des moyens de rotation adaptés pour permettre à ladite unité de confinement (201) de tourner autour d'au moins un axe de rotation coïncidant sensiblement avec l'axe dudit cylindre, et des moyens de moteur adaptés pour faire tourner ladite unité de confinement (201) afin de déplacer et d'agiter ladite substance, en exerçant une action centrifuge qui éloigne une eau résiduelle contenue dans la substance,
et
ladite unité de confinement (201) comprend au moins une paroi comprenant une pluralité de trous, lesdits trous étant également dimensionnés de manière à permettre de maintenir à l'intérieur de ladite substance mise en mouvement pendant ladite rotation, lesdits trous étant en outre configurés pour permettre audit air chaud, insufflé par lesdits moyens de dessiccation, d'entrer dans ladite unité de confinement (201) à travers lesdits trous.

2. Appareil selon la revendication 1, dans lequel ladite unité de prétraitement (102) comprend une matrice à trou (104) configurée pour être traversée par ladite substance pendant ledit pressage et/ou ledit broyage.

3. Appareil selon la revendication 2, dans lequel ladite unité de prétraitement (102) comprend en outre une vis (103) configurée pour faire tourner et dans le même temps, pousser ladite substance à travers ladite matrice à trou (104).

4. Appareil selon l'une quelconque des revendications 1 à 3, comprenant en outre une unité de micro-ondes (108) configurée pour traiter plus avant ladite substance par irradiation de micro-ondes, faisant ainsi monter la température de ladite substance afin de la rendre anhydre.

5. Appareil selon l'une quelconque des revendications 1 à 4, comprenant en outre un circuit pneumatique (204, 304) adapté pour acheminer ledit air chaud jusqu'auxdits moyens de dessiccation (205, 305), dans lequel lesdits moyens de dessiccation (205, 305) comprennent des moyens de répartition permettant de répartir ledit air chaud au sein de ladite unité de confinement (201, 301), ledit circuit pneumatique (204, 304) étant configuré pour se raccorder à un échangeur de chaleur (107) qui peut être alimenté en eau chauffée produit par un processus de production d'énergie électrique ou thermique à partir de ladite substance traitée, ledit échangeur (107) étant adapté pour chauffer ledit air.

6. Procédé de traitement de substances végétales et/ou de substances d'origine biologique et/ou de substances issues de la fraction biologique des déchets industriels et ménagers, pour la conversion desdites substances en biomasse à utiliser pour produire de l'énergie électrique et thermique à partir de sources renouvelables, comprenant les étapes de : collecte d'une substance à traiter dans une unité de confinement (201, 301) ; dessiccation (205, 305) de ladite substance par insufflation d'air chaud dans ladite unité de confinement (201, 301) ; mise en mouvement (202, 302) de ladite substance à l'intérieur de ladite unité de confinement (201, 301) pendant ladite dessiccation ; prétraitement (102) de ladite substance par pressage et/ou broyage, afin d'éliminer une partie de la teneur en eau de ladite substance avant que ladite substance soit collectée dans ladite unité de confinement (201, 301), dans lequel
ladite unité de confinement (201) a une forme sensiblement de type cylindre ou de type tronconique,
ladite substance est mise en mouvement et agitée par la rotation (202) de ladite unité de confinement (201) en exerçant une action centrifuge qui éloigne une eau résiduelle contenue dans la substance, et dans lequel
ladite substance est maintenue à l'intérieur de ladite unité de confinement (201) par une pluralité de trous dans au moins une paroi de celle-ci, à mesure que ledit air chaud est soufflé dans ladite unité de confinement (201) à travers ladite pluralité de trous et insufflé par lesdits moyens de dessiccation.

7. Procédé de traitement selon la revendication 6, dans lequel ledit pressage et/ou broyage (102) est réalisé par passage mécanique à travers une matrice à trou (104), de préférence par une action de poussée exercée par une vis rotative (103).

8. Procédé de traitement selon la revendication 6 ou 7, comprenant en outre l'étape de : traitement plus avant de ladite substance avec des micro-ondes (108), faisant ainsi monter la température de la substance afin de la rendre anhydre.

9. Procédé de traitement selon l'une quelconque des revendications 6 à 8, comprenant en outre les étapes de : soumission de ladite substance à une combustion ultérieure (110) pour produire de l'énergie électrique et/ou thermique (111) ; récupération d'une partie de la chaleur résultant de ladite production d'énergie électrique et/ou thermique (111) pour chauffer ledit air (107), ledit air étant chauffé dans un échangeur de chaleur (107) raccordé à un circuit pneumatique (204, 304) .
